# EUROPÄISCHE PATENTSCHRIFT

(11) **EP 0 950 692 B1**
(45) Veröffentlichungstag und Bekanntmachung des Hinweises auf die Patenterteilung: **17.10.2001**
(21) Anmeldenummer: 99106848.7
(22) Anmeldetag: 07.04.1999
(51) Int. Cl.: C09B 62/085, C09B 62/51, D06P 1/38

(54) **Azoverbindungen, Verfahren zu ihrer Herstellung und ihre Verwendung als faserreaktive Farbstoffe**
Azo compounds, process for their preparation and their use as fiber-reactive dyes
Composés azoiques, procédé pour leur préparation et leur utilisation comme colorants réactifs sur la fibre

(30) Priorität: 15.04.1998 DE 19816553
(43) Veröffentlichungstag der Anmeldung: 20.10.1999
(73) Patentinhaber: DyStar Textilfarben GmbH & Co. Deutschland KG, 60318 Frankfurt am Main (DE)
(72) Erfinder: Ehrenberg, Stefan Dr., 60528 Frankfurt am Main (DE); Herd, Karl-Josef Dr., 51519 Odenthal (DE)

(56) Entgegenhaltungen:
- EP-A- 0 557 841
- EP-A- 0 569 779
- EP-A- 0 576 026

## Beschreibung

Die Erfindung liegt auf dem technischen Gebiet der faserreaktiven Farbstoffe. Farbstoffe mit faserreaktiven Eigenschaften werden in großem Umfang für das Färben und Bedrucken von textilen Fasermaterialien eingesetzt. Obwohl eine große Anzahl von brauchbaren faserreaktiven Farbstoffen mit unterschiedlichen Eigenschaften für verschiedene Anwendungsbereiche zur Verfügung steht, beispielsweise wie in den Dokumenten EP-A-0 569 779, EP-A-0 557 841 und EP-A-0 576 026 beschrieben, kann der erreichte Stand der Technik angesichts der hohen Anforderungen in Bezug auf Eignung für bestimmte Färbeverfahren und das Echtheitsniveau der Färbungen vielfach nicht voll befriedigen. Die Bereitstellung weiterer verbesserter faserreaktiver Farbstoffe war daher dringend erwünscht.

Der vorliegenden Erfindung lag die Aufgabe zugrunde, neue orange bis scharlach färbende faserreaktive Farbstoffe zu finden, die einen hohen Fixiergrad und zugleich gute Waschechtheiten besitzen, insbesondere eine gute Auswaschbarkeit nicht fixierter Farbstoffanteile auf den Färbungen aufweisen und eine hohe Löslichkeit besitzen.

Mit der vorliegenden Erfindung wurde diese Aufgabe durch Auffindung der nachstehend angegebenen und definierten Monoazoverbindungen der allgemeinen Formel (1) gelöst.

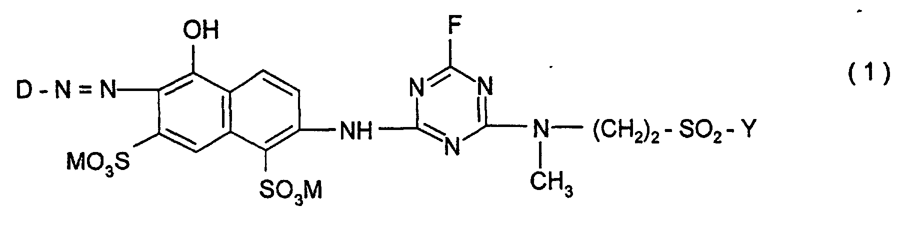

In Formel (1) bedeuten:
- M: ist Wasserstoff oder ein Alkalimetall, wie Natrium, Kalium oder Lithium, oder ein anderes salzbildendes, farbloses Metall, wie das Äquivalent eines Erdalkalimetalls, bevorzugt Wasserstoff oder ein Alkalimetall;
- D: ist eine Gruppe der allgemeinen Formel (2a) oder (2b) 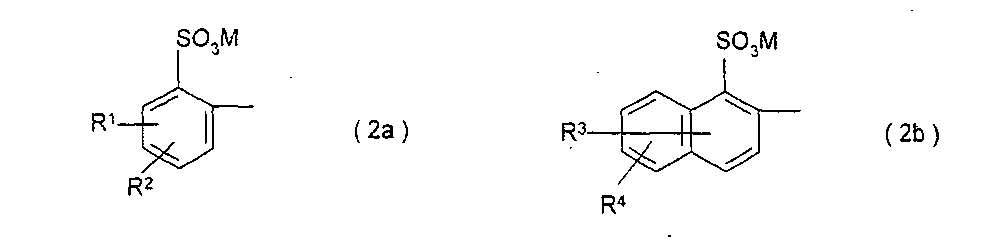 in welchen
M die obengenannte Bedeutung besitzt,
R¹ Wasserstoff, Alkyl von 1 bis 4 C-Atomen, wie Ethyl und insbesondere Methyl, oder Alkoxy von 1 bis 4 C-Atomen, wie Ethoxy und insbesondere Methoxy, und bevorzugt Wasserstoff, Methyl, Methoxy oder Ethoxy ist,
R² Wasserstoff, Sulfo oder Carboxy ist, bevorzugt Wasserstoff oder Sulfo,
R³ Wasserstoff oder Sulfo ist und
R⁴ Wasserstoff, Sulfo oder Carboxy ist, bevorzugt Wasserstoff oder Sulfo;
- Y: ist Vinyl oder ist Ethyl, das in β-Stellung durch einen alkalisch eliminierbaren Substituenten substituiert ist, wie beispielsweise Chlor, Thiosulfato, Phosphato, Sulfato, Acetyloxy und Sulfobenzoyloxy, und ist bevorzugt Vinyl oder β-Sulfatoethyl.

Sowohl in den oben angegebenen allgemeinen Formeln als auch in den nachfolgenden allgemeinen Formeln können die einzelnen Formelglieder im Rahmen ihrer Bedeutung zueinander gleiche oder voneinander verschiedene Bedeutungen besitzen.

Die Gruppen "Sulfo", "Thiosulfato", "Carboxy", "Phosphato" und "Sulfato" schließen sowohl deren Säureform als auch deren Salzform ein. Demgemäß bedeuten Sulfogruppen Gruppen entsprechend der allgemeinen Formel -SO₃M, Thiosulfatogruppen Gruppen entsprechend der allgemeinen Formel -S-SO₃M, Carboxygruppen Gruppen entsprechend der allgemeinen Formel -COOM, Phosphatogruppen Gruppen entsprechend der allgemeinen Formel -OPO₃M₂ und Sulfatogruppen Gruppen entsprechend der allgemeinen Formel -OSO₃M, in welchen M die obengenannte Bedeutung besitzt.

Reste D sind beispielsweise 2-Sulfo-phenyl, 2,5-Disulfo-phenyl, 2,4-Disulfophenyl, 2-Sulfo-5-methyl-phenyl, 2-Sulfo-4-methoxy-phenyl, 2-Sulfo-4-methylphenyl, 2-Sulfo-5-methoxy-phenyl, 2,5-Disulfo-4-methoxy-phenyl, 1,5,7-Trisulfonaphth-2-yl, 1,7-Disulfo-naphth-2-yl, 1,6-Disulfo-naphth-2-yl, 1-Sulfo-naphth2-yl und 1,5-Disulfo-naphth-2-yl, bevorzugt hiervon 4-Methoxy-2-sulfo-phenyl und 1,5-Disulfo-naphth-2-yl.

Die vorliegende Erfindung betrifft weiterhin Verfahren zur Herstellung der erfindungsgemäßen Azoverbindungen der allgemeinen Formel (1), die dadurch gekennzeichnet sind, daß man ein Diazoniumsalz eines aromatischen Amins der allgemeinen Formel D-NH₂ mit D der obengenannten Bedeutung mit einer Verbindung der allgemeinen Formel (3) 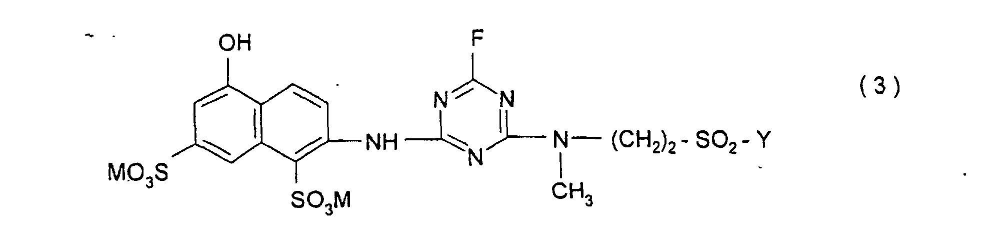 in welcher M und Y die obengenannten Bedeutungen haben, kuppelt, oder daß man eine Verbindung der allgemeinen Formel (4) 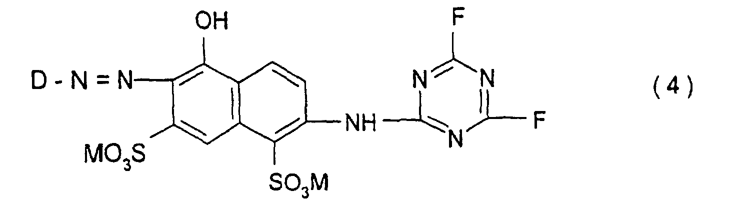 in welcher D und M die obengenannten Bedeutungen haben, mit einer Verbindung der allgemeinen Formel (5) 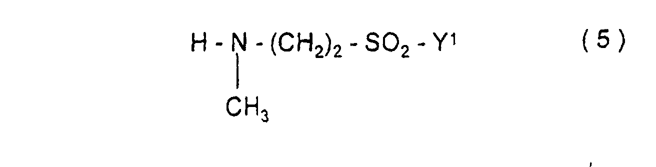 in welcher Y¹ Ethyl ist, das in β-Stellung durch einen alkalisch eliminierbaren Substituenten substituiert ist, wie beispielsweise Chlor, Thiosulfato, Phosphato, Sulfato, Acetyloxy und Sulfobenzoyloxy, und bevorzugt β-Sulfatoethyl ist, umsetzt und gegebenenfalls anschließend die erhaltene Verbindung unter Einwirkung eines Alkalis bei einem pH-Wert zwischen 9 und 11 und bei einer Temperatur zwischen 0 und 15°C in die Verbindung der allgemeinen Formel (1) mit Y gleich Vinyl überführt.

Die Synthese der erfindungsgemäßen Monoazoverbindungen durch Umsetzung eines Diazoniumsalzes eines Amins der allgemeinen Formel D-NH₂ mit einer Verbindung der allgemeinen Formel (3) erfolgt nach den üblichen Verfahrensweisen einer Kupplungsreaktion, so beispielsweise bei einem pH-Wert zwischen 3 und 8,5, bevorzugt zwischen 4 und 7,5, und bei einer Temperatur zwischen 0 und 30°C, bevorzugt zwischen 5 und 25°C, im wäßrigen Medium. Die Diazotierung der Ausgangsverbindung der allgemeinen Formel D-NH₂ erfolgt in üblicher Weise mittels salpetriger Säure, wie beispielsweise mittels Natriumnitrit in wäßriger Salzsäure oder Schwefelsäure, bei einer Temperatur zwischen -10°C und +15°C und bei einem pH-Wert von kleiner als 2,5.

Die Umsetzung einer Verbindung der allgemeinen Formel (4) mit einer Verbindung der allgemeinen Formel (5) erfolgt analog bekannter Verfahrensweisen einer Umsetzung von Fluortriazin-Verbindungen mit einer Aminoverbindung im wäßrigen oder wäßrig-organischen Medium in Suspension oder Lösung. Gleiches gilt für die Herstellung der Ausgangsverbindung der allgemeinen Formel (3), durch Umsetzung von 2-Amino-5-hydroxy-naphthalin-1,7-disulfonsäure mit 2,4,6-Trifluor-1,3,5-triazin (Cyanurfluorid) im pH-Bereich von 2 bis 6, insbesondere von 3 bis 5, und bei Temperaturen von -5°C bis +20°C, insbesondere von 0 bis 5°C, gegebenenfalls in Gegenwart eines Puffers, zur Difluorverbindung. Die anschließende Umsetzung mit einem Amin der allgemeinen Formel (5) erfolgt in der Regel bei einer Temperatur zwischen 0 und 15°C, bevorzugt bei einer Temperatur zwischen 0 und 10°C, und bei einem pH-Wert zwischen 5,0 und 8,0, bevorzugt zwischen 6,0 und 7,0.

Bei der Umsetzung von Verbindungen der allgemeinen Formel (3), (4) und (5) ist darauf zu achten, daß die faserreaktiven Gruppen Y und Y¹ im alkalischen Bereich nicht geschädigt werden, d. h. dass im pH-Bereich von 5,0 bis 8,0 gearbeitet wird.
Die Abscheidung der erfindungsgemäß hergestellten Azoverbindungen der allgemeinen Formel (1) aus den Syntheseansätzen erfolgt nach allgemein bekannten Methoden entweder durch Ausfällen aus dem Reaktionsmedium mittels Elektrolyten, wie beispielsweise Natriumchlorid oder Kaliumchlorid, oder durch Eindampfen der Reaktionslösung, beispielsweise durch Sprühtrocknung, wobei dieser Reaktionslösung eine Puffersubstanz zugeführt werden kann.

Die Monoazoverbindungen der allgemeinen Formel (1) eignen sich zum Färben und Bedrucken von hydroxy- und amidgruppenhaltigen Materialien, insbesondere Cellulosefasermaterialien. Sie zeichnen sich durch eine hohe Reaktivität und einen hohen Fixiergrad aus. Die mit den erfindungsgemäßen Monoazoverbindungen erhältlichen Färbungen und Drucke auf Cellulosefasermaterialien zeichnen sich durch eine hohe Faser-Farbstoff-Bindungsstabilität, gute Naßechtheiten und peroxid- oder chlorhaltigen Waschmitteln, aus. Die Auswaschbarkeit der beim Färben oder Druck nur in geringerem Maße entstehenden Hydrolyseprodukte ist ausgezeichnet.

Die nachfolgenden Beispiele dienen zur Erläuterung der Erfindung. Die Teile sind Gewichtsteile, die Prozentangaben stellen Gewichtsprozente dar, sofern nicht anders vermerkt. Gewichtsteile beziehen sich zu Volumenteilen wie Kilogramm zu Liter.

Die in den Beispielen formelmäßig beschriebenen Verbindungen sind in Form der freien Säure angegeben; im allgemeinen werden sie in Form ihrer Alkalimetallsalze, wie Lithium-, Natrium oder Kaliumsalze, hergestellt und isoliert und in Form ihrer Salze zum Färben verwendet. Ebenso können die in den nachfolgenden Beispielen, insbesondere Tabellenbeispielen, in Form der freien Säure genannten Ausgangsverbindungen und Komponenten als solche oder in Form ihrer Salze, vorzugsweise Alkalimetallsalze, in die Synthese eingesetzt werden.

Die für die erfindungsgemäßen Farbstoffe angegebenen Absorptionsmaxima (λₘₐₓ) im sichtbaren Bereich wurden anhand ihrer Alkalimetallsalze in wäßriger Lösung ermittelt.
Die Wellenlängenangabe bezieht sich auf nm.

### Beispiel 1

a) Etwa 200 Teile einer neutralen (pH-Wert gleich 7) wäßrigen Lösung mit 31,9 Teilen 2-Amino-5-hydroxy-naphthalin-1,7-disulfonsäure werden mit 200 Teilen Eis und 2,2 Teilen Natriumfluorid versetzt. 11 Vol.-Teile 2,4,6-Trifluor-1,3,5-triazin (Cyanurfluorid) werden schnell hinzugerührt. Der Ansatz wird noch fünf Minuten nachgerührt, sodann mit 27,2 Teilen N-Methyl-N-[β-(β'-sulfatoethylsulfonyl)-ethyl]-amin versetzt, mit 20 %iger wäßriger Natriumcarbonatlösung auf einen pH-Wert zwischen 6,5 und 7,0 eingestellt und bei einer Reaktionstemperatur von 5 bis 10°C gehalten; die Umsetzung ist nach etwa 30 Minuten beendet.
b) Zu der so hergestellten Monofluortriazin-Verbindung, die als Kupplungskomponente dient, gibt man eine auf üblichem Wege aus 30,3 Teilen 1,5-Disulfo-2-amino-naphthalin in 200 Teilen Wasser unter Verwendung von 30 Vol.-Teilen konzentrierter wäßriger Salzsäure und 20 Vol.-Teilen einer wäßrigen 5-N-Natriumnitritlösung hergestellte Diazoniumsalzsuspension, wobei man gleichzeitig den pH-Wert des Reaktionsansatzes mittels 20 %iger wäßriger Natriumcarbonatlösung bei einem pH-Wert zwischen 6,5 und 7,0 hält und die Kupplungsreaktion bei einer Temperatur von etwa 15°C durchführt.

Nach beendeter Kupplung wird die erfindungsgemäße Azoverbindung der Formel (in Form der freien Säure geschrieben) 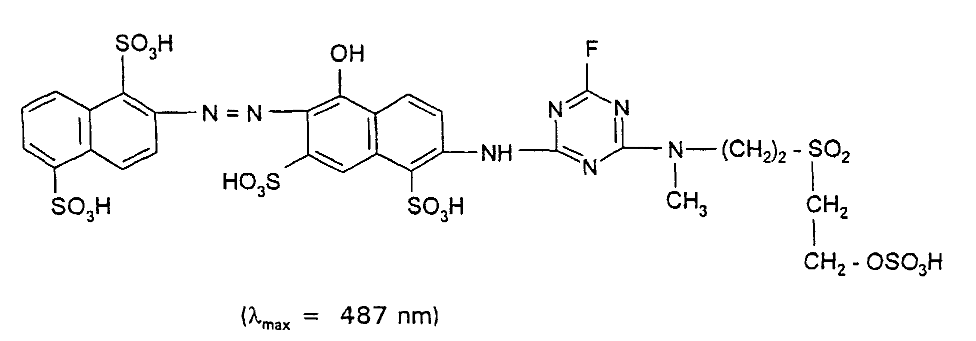 mittels Natriumchlorid ausgesalzen und isoliert. Sie besitzt wertvolle faserreaktive Farbstoffeigenschaften und färbt die in der Beschreibung genannten Materialien, wie beispielsweise Baumwolle, nach den in der Technik für faserreaktive Farbstoffe üblichen Anwendungsverfahren in brillanten orangen Tönen mit guten Echtheitseigenschaften, von denen insbesondere die Waschechtheiten hervorzuheben sind.

### Beispiel 2

Man verfährt gemäß der Verfahrensweise des Beispieles 1a) zur Herstellung der Kupplungskomponente und versetzt diese in dem hergestellten wäßrigen Reaktionsansatz mit einer auf üblichem Wege hergestellten Diazoniumsalzlösung aus 20,3 Teilen 2-Sulfo-4-methoxy-anilin; bei der Zugabe der Diazoniumsalzverbindung wird gleichzeitig mit 20 %iger wäßriger Natriumcarbonatlösung ein pH-Wert zwischen 6,5 und 7,0 bei einer Kupplungstemperatur von 10 bis 15°C gehalten, wobei man unter diesen Reaktionsbedingungen den Ansatz noch eine Weile nachrührt.

Die gebildete erfindungsgemäße Monoazoverbindung der Formel (in Form der freien Säure geschrieben) 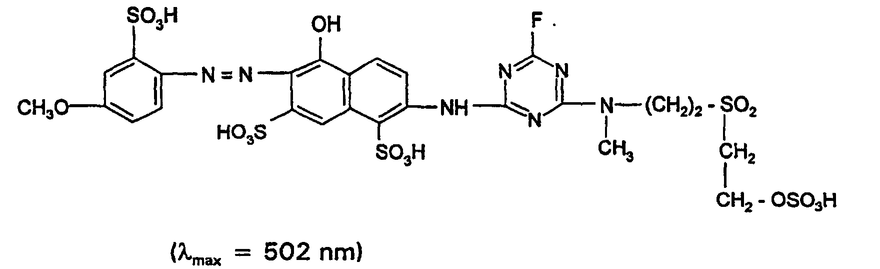 wird in üblicher Weise als Alkalisalz, wie Natriumsalz, isoliert, beispielsweise durch Aussalzen mit Natriumchlorid. Die erfindungsgemäße Azoverbindung besitzt sehr gute Farbstoffeigenschaften und färbt Cellulosefasermaterialien, wie Baumwolle, nach den in der Technik für faserreaktive Farbstoffe üblichen Färbeverfahren in brillanten Scharlachtönen.
Der in Beispiel 2 beschriebene Farbstoff kann alternativ auch in geänderter Reihenfolge hergestellt werden.
Eine auf üblichem Weg hergestellte Diazoniumsalzlösung aus 20,3 Teilen 2-Sulfo-4-methoxy-anilin wird innerhalb von 30 min zu einer neutralen Lösung 31,9 Teilen 2-Amino-5-hydroxy-naphthalin-1,7-disulfonsäure gegeben. Mit 15 %iger Sodalösung wird der pH-Wert bei 7,0-8,0 gehalten. Nach beendeter Kupplung wird die Reaktionsmischung durch Verdünnen mit Wasser in Lösung gebracht. Bei 0°C werden innerhalb von 10 min. 11 Vol.-Teile 2,4,6-Trifluor-1,3,5-triazin zugegeben und 10 min nachgerührt. Der pH-Wert wird dabei bei 7,0-7,5 gehalten.
Nach Zugabe von 27,2 Teilen N-Methyl-N-[β-(β'-sulfatoethylsulfonyl)-ethyl]-amin wird der pH-Wert auf 6,5-7,0 gestellt und bei einer Reaktionstemperatur von 5-10 °C gehalten.
Nach beendeter Umsetzung wird der erfindungsgemäße Farbstoff mit Natriumchlorid ausgesalzen und isoliert.

### Beispiel 3

Man verfährt in der im Beispiel 1 a) hergestellten Weise zur Synthese der Kupplungskomponente und kuppelt diese unter den in Beispiel 1b) angegebenen Reaktionsbedingungen mit dem Diazoniumsalz des 2-Sulfo-4-methyl-anilins. Nach erfolgter Kupplungsreaktion wird der Reaktionsansatz auf einen pH-Wert von 11 gestellt und während etwa 60 Minuten bei einer Temperatur von 0 bis 5°C unter Einhalt dieses pH-Wertes weitergerührt.
Die erfindungsgemäße Azoverbindung der Formel (in Form der freien Säure geschrieben) 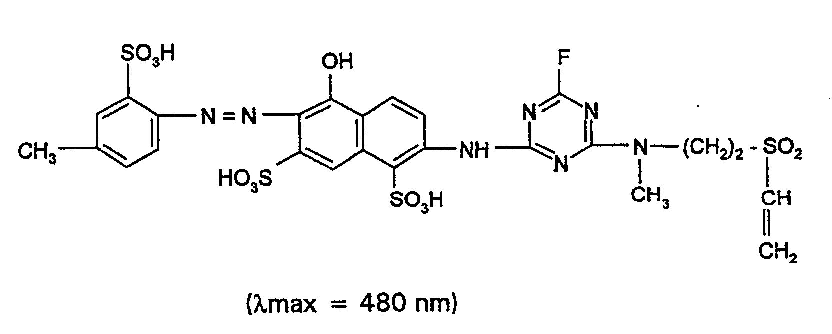 wird in üblicher Weise isoliert; sie färbt beispielsweise Baumwolle nach den üblichen Anwendungsverfahren in brillanten orangefarbenen Tönen.

## Patentansprüche

1. Monoazoverbindung der allgemeinen Formel (1) a 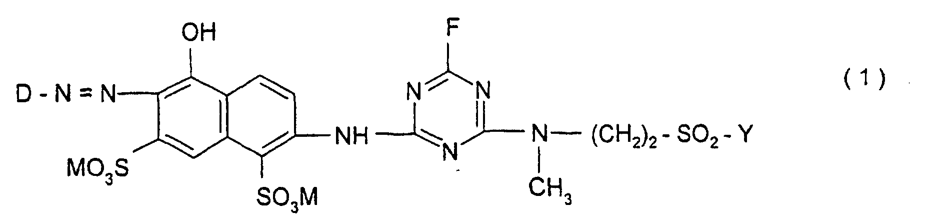 worin bedeuten:
M ist Wasserstoff oder ein Alkalimetall oder ein anderes salzbildendes, farbloses Metall;
D ist eine Gruppe der allgemeinen Formel (2a) oder (2b) 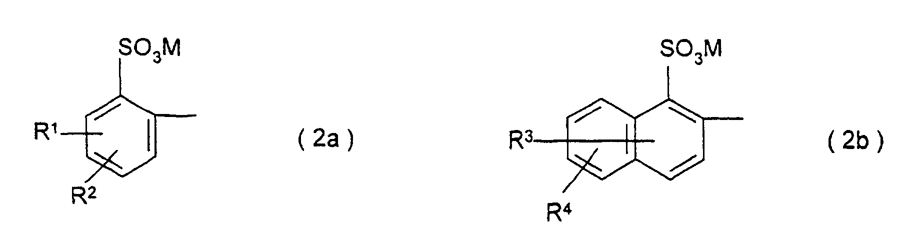 in welchen
M die obengenannte Bedeutung besitzt,
R¹ Wasserstoff, Alkyl von 1 bis 4 C-Atomen oder Alkoxy von 1 bis 4 C-Atomen ist,
R² Wasserstoff, Sulfo oder Carboxy ist,
R³ Wasserstoff oder Sulfo ist und
R⁴ Wasserstoff, Sulfo oder Carboxy ist;
Y ist Vinyl oder ist Ethyl, das in β-Stellung durch einen alkalisch eliminierbaren Substituenten substituiert ist.

2. Monoazoverbindung nach Anspruch 1, **dadurch gekennzeichnet, daß** D eine Gruppe der in Anspruch 1 genannten und definierten allgemeinen Formel (2a) ist.

3. Monoazoverbindungen nach Anspruch 2, **dadurch gekennzeichnet, daß** R² Wasserstoff ist.

4. Monoazoverbindung nach Anspruch 1, **dadurch gekennzeichnet, daß** D eine Gruppe der in Anspruch 1 genannten und definierten allgemeinen Formel (2b) ist.

5. Monoazoverbindung nach Anspruch 1, **dadurch gekennzeichnet, daß** D 2-Sulfo-4-methoxy-phenyl ist.

6. Monoazoverbindung nach Anspruch 1, **dadurch gekennzeichnet, daß** D 1,5-Disulfo-naphth-2-yl ist.

7. Monoazoverbindung nach mindestens einem der Ansprüche 1 bis 6, **dadurch gekennzeichnet, daß** Y β-Sulfatoethyl oder Vinyl ist.

8. Monoazoverbindung nach mindestens einem der Ansprüche 1 bis 6, **dadurch gekennzeichnet, daß** Y β-Sulfatoethyl ist.

9. Monoazoverbindung nach mindestens einem der Ansprüche 1 bis 8, **dadurch gekennzeichnet, daß** M Wasserstoff oder ein Alkalimetall ist.

10. Verfahren zur Herstellung einer Monoazoverbindung der allgemeinen Formel (1) von Anspruch 1, **dadurch gekennzeichnet, daß** man ein Diazoniumsalz eines aromatischen Amins der allgemeinen Formel D-NH₂ mit D der in Anspruch 1 genannten Bedeutung mit einer Verbindung der allgemeinen Formel (3) 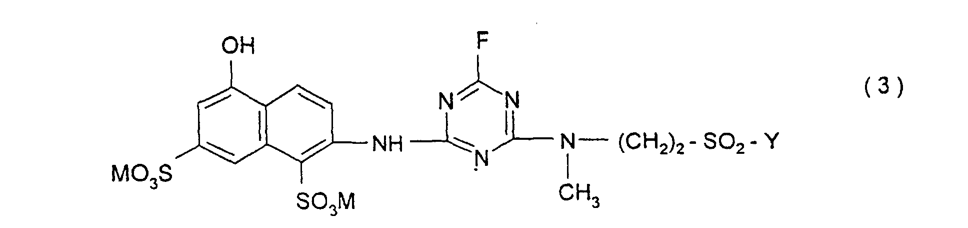 in welcher M und Y die in Anspruch 1 genannten Bedeutungen haben, kuppelt,
oder daß man eine Verbindung der allgemeinen Formel (4) 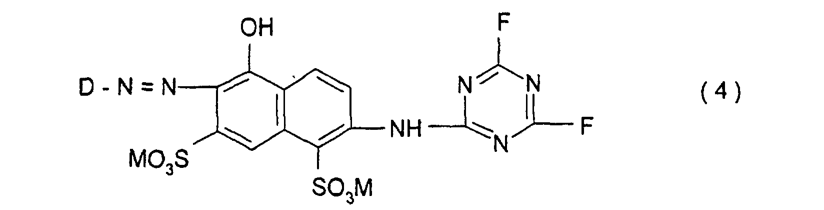 in welcher D und M die in Anspruch 1 genannten Bedeutungen haben, mit einer Verbindung der allgemeinen Formel (5) 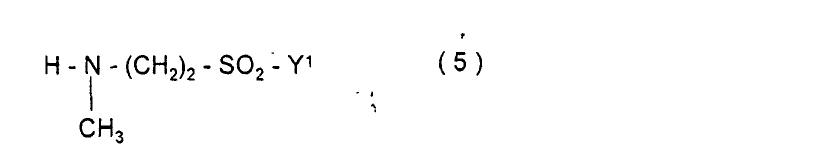 in welcher Y¹ Ethyl ist, das in β-Stellung durch einen alkalisch eliminierbaren Substituenten substituiert ist, umsetzt und gegebenenfalls anschließend die erhaltene Verbindung unter Einwirkung eines Alkalis bei einem pH-Wert zwischen 9 und 11 und einer Temperatur zwischen 0 und 15°C in die Verbindung der allgemeinen Formel (1) mit Y gleich Vinyl überführt.

11. Verwendung einer Monoazoverbindung der allgemeinen Formel (1) von Anspruch 1 oder einer nach Anspruch 10 hergestellten Monoazoverbindung der allgemeinen Formel (1) zum Färben von hydroxy- und/oder carbonamidgruppenhaltigem Material, insbesondere Fasermaterial.

12. Verfahren zum Färben von hydroxy- und/oder carbonamidgruppenhaltigem Material, bei welchem man einen Farbstoff auf das Material aufbringt und den Farbstoff auf dem Material mittels Wärme oder mit Hilfe eines alkalisch wirkenden Mittels oder mittels beider Maßnahmen fixiert, **dadurch gekennzeichnet, daß** man als Farbstoff eine Monoazoverbindung der allgemeinen Formel (1) von Anspruch 1 oder einen nach Anspruch 10 hergestellte Monoazoverbindung der allgemeinen Formel (1) einsetzt.

13. Verfahren nach Anspruch 12, **dadurch gekennzeichnet, daß** das Material ein Fasermaterial ist.

## Claims

1. A monoazo compound of the general formula (1) 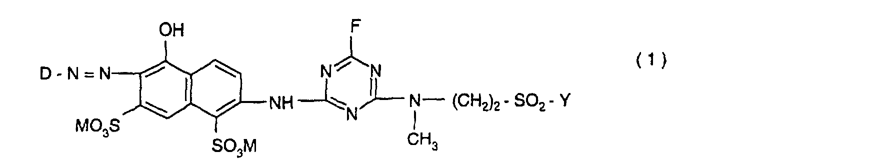 where
M is hydrogen or an alkali metal, or some other salt-forming colorless metal;
D is a group of the general formula (2a) or (2b) 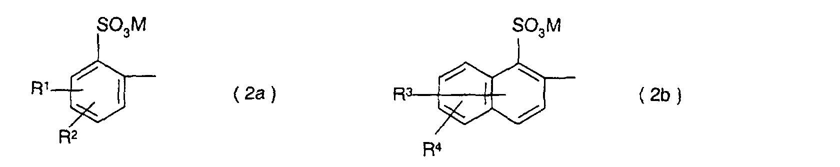 where
M is as defined above,
R¹ is hydrogen, alkyl of 1 to 4 carbon atoms or alkoxy of 1 to 4 carbon atoms,
R² is hydrogen, sulfo or carboxyl,
R³ is hydrogen or sulfo, and
R⁴ is hydrogen, sulfo or carboxyl;
Y is vinyl or is ethyl which is substituted in the β-position by an alkali-eliminable substituent.

2. The monoazo compound of claim 1, wherein D is a group of the general formula (2a) mentioned and defined in claim 1.

3. The monoazo compound of claim 2, wherein R² is hydrogen.

4. The monoazo compound of claim 1, wherein D is a group of the general formula (2b) mentioned and defined in claim 1.

5. The monoazo compound of claim 1, wherein D is 2-sulfo-4-methoxyphenyl.

6. The monoazo compound of claim 1, wherein D is 1,5-disulfonaphth-2-yl.

7. The monoazo compound of at least one of claims 1 to 6, wherein Y is β-sulfatoethyl or vinyl.

8. The monoazo compound of at least one of claims 1 to 6, wherein Y is β-sulfatoethyl.

9. The monoazo compound of at least one of claims 1 to 8, wherein M is hydrogen or an alkali metal.

10. A process for preparing a monoazo compound of the general formula (1) in claim 1, which comprises coupling a diazonium salt of an aromatic amine of the general formula D-NH₂, where D is as defined in claim 1, with a compound of the general formula (3) 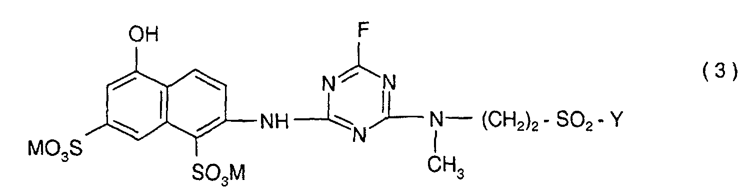 where M and Y are each as defined in claim 1,
or reacting a compound of the general formula (4) 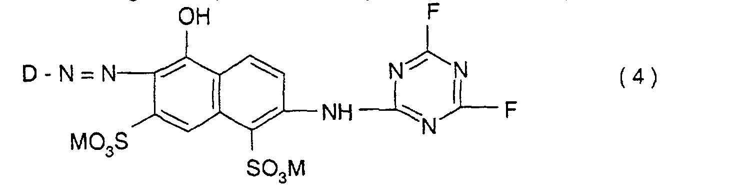 where D and M are each as defined in claim 1, with a compound of the general formula (5) 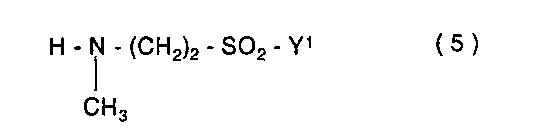 where Y¹ is ethyl which is substituted in the β-position by an alkali-eliminable substituent and optionally converting the resulting compound by the action of an alkali at a pH between 9 and 11 and at a temperature between 0 and 15°C into the compound of the general formula (1) where is Y vinyl.

11. The use of a monoazo compound of the general formula (1) in claim 1 or of a monoazo compound of the general formula (1) prepared according to claim 10, for dyeing hydroxyl- and/or carboxamido-containing material, especially fiber material.

12. A process for dyeing hydroxyl- and/or carboxamido-containing material by applying a dye to the material and fixing the dye on the material by means of heat or with the aid of an alkaline agent or by means of both measures, which comprises using a dye comprising a monoazo compound of the general formula (1) in claim 1 or a monoazo compound of the general formula (1) prepared according to claim 10.

13. The process of claim 12, wherein the material is a fiber material.

## Revendications

1. Composé monoazoïque de formule générale (1) 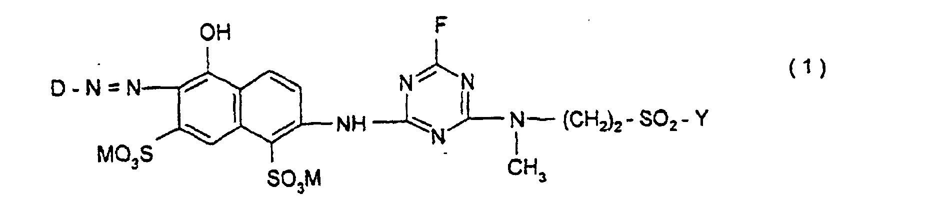 dans laquelle :
M représente un hydrogène ou un métal alcalin ou un autre métal incolore formant des sels ;
D représente un groupe de formules générales (2a) ou (2b) 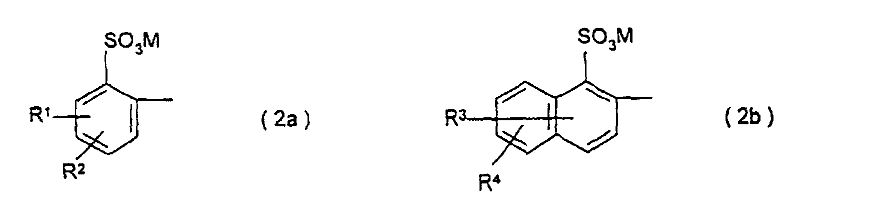 dans lesquelles
M a la signification susmentionnée,
R¹ représente un hydrogène, un alkyle de 1 à 4 atomes de carbone ou un alcoxy ayant de 1 à 4 atomes de carbone,
R² représente un hydrogène, un sulfo ou un carboxy,
R³ représente un hydrogène ou un sulfo, et
R⁴ représente un hydrogène, un sulfo ou un carboxy ;
Y représente un vinyle ou un éthyle qui est substitué en position β par un substituant pouvant être éliminé en milieu alcalin.

2. Composé monoazoïque selon la revendication 1, **caractérisé en ce que** D représente un groupe de formule générale (2a) mentionnée et définie à la revendication 1.

3. Composés monoazoïques selon la revendication 2, **caractérisés en ce que** R² représente un hydrogène.

4. Composé monoazoïque selon la revendication 1, **caractérisé en ce que** D représente un groupe de formule générale (2b) mentionnée et définie à la revendication 1.

5. Composé monoazoïque selon la revendication 1, **caractérisé en ce que** D représente un 2-sulfo-4-méthoxyphényle.

6. Composé monoazoïque selon la revendication 1, **caractérisé en ce que** D représente un 1,5-disulfonapht-2-yle.

7. Composé monoazoique selon au moins l'une des revendications 1 à 6, **caractérisé en ce que** Y représente un β-sulfatoéthyle ou un vinyle.

8. Composé monoazoïque selon au moins l'une des revendications 1 à 6, **caractérisé en ce que** Y représente un β-sulfatoéthyle.

9. Composé monoazoïque selon au moins l'une des revendications 1 à 8, **caractérisé en ce que** M représente un hydrogène ou un métal alcalin.

10. Procédé de préparation d'un composé monoazoïque de formule générale (1) selon la revendication 1, **caractérisé en ce qu'**un sel de diazonium d'une amine aromatique de formule générale D-NH₂ dans laquelle D a la signification mentionnée à la revendication 1, est couplé avec un composé de formule générale (3) 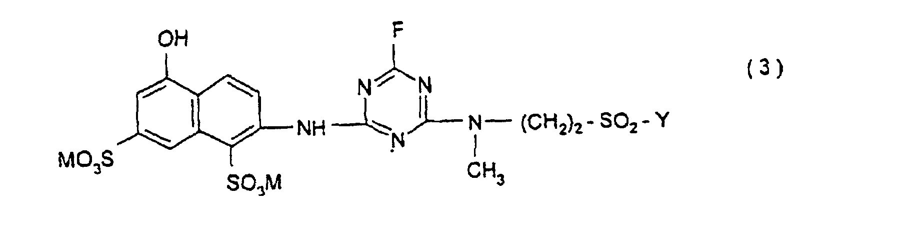 dans laquelle M et Y ont les significations mentionnées à la revendication 1,
ou **en ce qu'**un composé de formule (4) 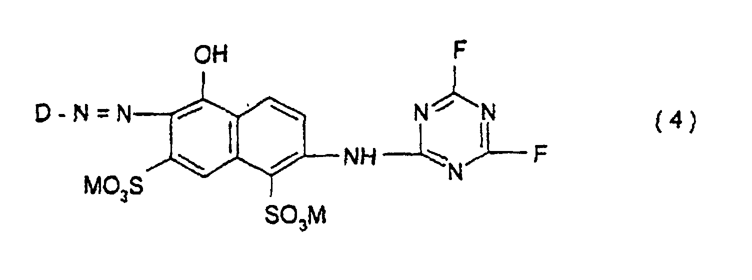 dans laquelle D et M ont les significations mentionnées à la revendication 1, est mis à réagir avec un composé de formule générale (5) 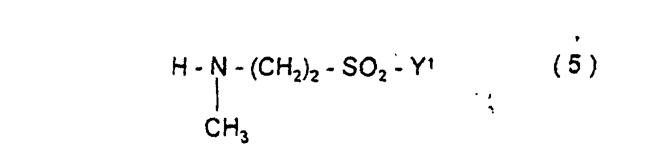 dans laquelle Y¹ est un éthyle qui est substitué en position β par un substituant pouvant être éliminé en milieu alcalin, et éventuellement ensuite, le composé résultant est transformé en le composé de formule générale (1) dans laquelle Y est un vinyle, sous l'action d'un alcali à un pH compris entre 9 et 11 et à une température comprise entre 0 et 15°C.

11. Utilisation d'un composé monoazoïque de formule générale (1) selon la revendication 1 ou d'un composé monoazoïque de formule générale (1) préparé selon la revendication 10, pour la teinture d'une matière renfermant des groupes hydroxy et/ou carboxamide, en particulier d'une matière fibreuse.

12. Procédé de teinture d'une matière renfermant des groupes hydroxy et/ou carboxamide, dans lequel un colorant est appliqué sur la matière et le colorant est fixé sur la matière par la chaleur ou à l'aide d'un agent alcalin ou par les deux mesures, **caractérisé en ce que** l'on utilise en tant que colorant, un composé monoazoïque de formule générale (1) selon la revendication 1 ou un composé monoazoïque de formule générale (1) préparé selon la revendication 10.

13. Procédé selon la revendication 12, **caractérisé en ce que** la matière est une matière fibreuse.
